# EUROPÄISCHE PATENTANMELDUNG

(11) **EP 4 729 807 A1**
(43) Veröffentlichungstag der Anmeldung: **22.04.2026**
(21) Anmeldenummer: 24207351.8
(22) Anmeldetag: 18.10.2024
(51) Int. Cl.: F16H 57/04

(54) **SCHMIERMITTELVERSORGUNG FÜR EINEN ACHSENDANTRIEB**

(71) Anmelder: Deere & Company, Moline, IL 61265 (US)
(72) Erfinder: STEINER, Tobias, 68163 Mannheim (DE); BUSE, Jonas, 68163 Mannheim (DE); TAMBE, Shaligram, 68163 Mannheim (DE)
(74) Vertreter: Holst, Sönke

(57) **Zusammenfassung**

Eine Schmiermittelversorgung für einen Achsendantrieb (10), der ein Gehäuse (18) mit einer Eingangswelle (14), einem Planetengetriebe und einer antreibbaren Achse (30) umfasst, wobei die Achse (30) mittels einer inneren Lagerung (36) und einer äußeren Lagerung (34) am Gehäuse (18) abgestützt, von der Eingangswelle (14) über das Planetengetriebe antreibbar und mit einem Radflansch (32) zur Aufnahme eines Rades gekoppelt ist, zeichnet sich dadurch aus, dass die Schmiermittelversorgung einen ersten Kanalabschnitt, mit dem die äußere Lagerung (34) über eine Pumpe (52) mit einem Schmiermittel aus einem Vorrat (50) beaufschlagbar ist, einen zweiten Kanalabschnitt, mit dem das Schmiermittel von der äußeren Lagerung (34) zur inneren Lagerung (36) führbar ist, sowie einen dritten Kanalabschnitt umfasst, mit dem das Schmiermittel von der inneren Lagerung zum Planetengetriebe führbar ist.

## Beschreibung

Die Erfindung betrifft eine Schmiermittelversorgung für einen Achsendantrieb, der ein Gehäuse mit einer Eingangswelle, einem Planetengetriebe und einer antreibbaren Achse umfasst, wobei die Achse mittels einer inneren Lagerung und einer äußeren Lagerung am Gehäuse abgestützt, von der Eingangswelle über das Planetengetriebe antreibbar und mit einem Radflansch zur Aufnahme eines Rades gekoppelt ist.

### Stand der Technik

Bei manchen Kraftfahrzeugen, insbesondere bei Hinterachsen von landwirtschaftlichen Ackerschleppern, erfolgt der Antrieb von Rädern über ein Differenzialgetriebe und an dessen beiden Seiten angeordnete Endantriebe, in denen eine die Drehzahl reduzierende Übersetzungsstufe enthalten ist. Die Endantriebe werden durch eine mit dem Differenzialgetriebe antriebsverbundene Eingangswelle angetrieben. Die Eingangswelle ist mit einem Sonnenrad eines Planetengetriebes drehmomentschlüssig gekoppelt, während die Planetenradträger mit der angetriebenen Achse gekoppelt sind, an welcher ein im Bodeneingriff befindliches Rad angebracht wird. Das Gehäuse des Endantriebs ist mit dem Ringrad des Planetengetriebes verbunden. Die angetriebene Achse ist an inneren und äußeren Achslagern im Gehäuse des Endantriebs drehbar abgestützt. Hierzu sei beispielsweise auf den Stand der Technik nach US 3 515 246 A und JP S 59 118 602 U verwiesen.

Um die Endantriebe funktionsfähig zu halten, sind die Achslager und die beweglichen Elemente des Planetengetriebes mit Schmiermittel (Öl) zu versorgen. Die Schmiermittelversorgung erfolgt üblicherweise durch das Differenzialgetriebe, das mit dem Gehäuse des Endantriebs durch Öffnungen verbunden ist, durch die das im Differenzialgetriebegehäuse enthaltene Schmiermittel in das Innere des Gehäuses des Endantriebs und wieder zurück ins Differenzialgetriebegehäuse fließen kann.

Da landwirtschaftliche Fahrzeuge nicht nur auf horizontalen Flächen, sondern auch an Seitenhängen betrieben werden, besteht die Gefahr, dass der hangauf liegende Endantrieb nicht hinreichend mit Schmiermittel versorgt wird. Um zu vermeiden, die Gehäuse der Endantriebe komplett oder zumindest bis in diejenige Höhe mit Schmiermittel füllen zu müssen, dass das höchste zu schmierende Element des Endantriebs sogar in der größtmöglichen Seitenneigung im Schmiermittel gebadet wird, sieht der Stand der Technik nach US 3 515 246 A vor, in den Drehzapfen der Planetenräder trogartige Reservoirs anzubringen, die während ihres Umlaufs in den Schmiermittelvorrat an der Unterseite des Gehäuses des Endantriebs eintauchen und während ihres Umlaufs nach oben die inneren Lagerungen der angetriebenen Achse über Leitelemente mit Schmiermittel versorgen. Zwischen der Achse und dem Gehäuse des Endantriebs ist, der Außenseite der inneren Lagerung unmittelbar benachbart, eine Dichtung angeordnet. Das Differenzialgetriebe und die beiden Endantriebe bilden ein gemeinsames, öldichtes Gehäuse und kommunizieren untereinander durch jene Lagerungen, an denen die Eingangswellen im Gehäuse des Differenzialgetriebes abgestützt werden, sodass das Schmiermittel zwischen den Gehäusen des Differenzialgetriebes und der Endantriebe fließen kann. In welcher Weise die äußeren Lager, die sich an den äußeren Enden der Achse befinden, mit Schmierstoff versorgt werden, ist nicht offenbart.

Eine ähnliche Anordnung mit einem Reservoir in den Drehzapfen der Planetenräder eines Achsendantriebes, jedoch zur Schmierung der Planetenradlager, zeigt die DD 243 739 A1.

Weitere Anordnungen zur Versorgung von Lagerungen von Planetenrädern mit Schmiermittel, die nicht in Zusammenhang mit Endantrieben beschrieben wurden, sehen eine Zuführung von Schmiermittel durch einen axialen Kanal der Welle mit einer radialen Austrittsöffnung und einer Schmiermittelfangschale vor, die eine Kanalstruktur im Planetenzapfen mit Schmiermittel versorgt, durch welche es zum Lager des Planetenrades gelangt (DE 10 2021 123 097 B3), bzw. eine Seitenplatte des Planetenradträgers mit einer Nut auszustatten, die das Schmiermittel von der Welle zum Lager der Planetenräder leitet (DE 11 2006 000 382 T5), oder es werden mit Schmiermittel beaufschlagte Leitungen verwendet, um die Lager des Planetenrads (US 2014/0287864 A1) und die kämmenden Zähne von Planeten- und Ringrad zu schmieren (US 2015/0300255 A1).

### Aufgabe

Nach alledem lässt sich festhalten, dass bei bisherigen Achsendantrieben, vgl. JP S 59 118 602 U, die Schmierung der Lagerungen und der im Eingriff stehenden Zahnradflächen der Planetengetriebe darauf beruht, dass sie zumindest während eines Teils ihres Umlaufs in einen Schmiermittelvorrat im Gehäuse des Achsendantriebs eintauchen. Dieses Schmiermittel wird aus dem Gehäuse des Differenzialgetriebes bereitgestellt. Aus diesem Grunde ist eine gewisse Höhe des Schmiermittelvorrats vorzusehen, was einerseits zu Reibung aufgrund von Planschen führt, wenn die Planetenräder in den Schmiermittelvorrat eintauchen, andererseits besteht an Seitenhängen das Problem des absinkenden Schmiermittelstandes auf der hangauf gelegenen Seite. Die Anordnungen nach US 3 515 246 A und DD 243 739 A1 verbessern diese Problematik nur teilweise, indem sie das Schmiermittel während ihres Umlaufs in Hohlräumen in Drehzapfen der Planetenräder aufnehmen, mit nach oben führen und dort wieder abgeben.

Die der Erfindung zu Grunde liegende Aufgabe wird darin gesehen, einen Achsendantrieb bereitzustellen, bei dem die beschriebenen Probleme nicht oder in einem verminderten Maße vorliegen.

### Lösung

Diese Aufgabe wird erfindungsgemäß durch die Lehre des Patentanspruchs 1, wobei in den weiteren Patentansprüchen Merkmale aufgeführt sind, die die Lösung in vorteilhafter Weise weiterentwickeln.

Eine Schmiermittelversorgung für einen Achsendantrieb, der ein Gehäuse mit einer Eingangswelle, einem Planetengetriebe und einer antreibbaren Achse umfasst, wobei die Achse mittels einer inneren Lagerung und einer äußeren Lagerung am Gehäuse abgestützt, von der Eingangswelle über das Planetengetriebe antreibbar und mit einem Radflansch zur Aufnahme eines Rades gekoppelt ist, zeichnet sich dadurch aus, dass die Schmiermittelversorgung einen ersten Kanalabschnitt, mit dem die äußere Lagerung über eine Pumpe mit einem Schmiermittel aus einem Vorrat beaufschlagbar ist, einen zweiten Kanalabschnitt, mit dem das Schmiermittel von der äußeren Lagerung zur inneren Lagerung führbar ist, sowie einen dritten Kanalabschnitt umfasst, mit dem das Schmiermittel von der inneren Lagerung zum Planetengetriebe führbar ist.

Mit anderen Worten erfolgt die Schmiermittelversorgung des Achsendantriebs von einer Pumpe über einen ersten Kanalabschnitt zur äußeren Lagerung der Achse am Gehäuse, von dort über einen zweiten Kanalabschnitt zur inneren Lagerung der Achse am Gehäuse und von dort über einen dritten Kanalabschnitt zum Planetengetriebe. Es ist somit eine aktive Schmiermittelversorgung vorgesehen, die nacheinander alle zu schmierenden Komponenten des Achsendantriebs erreicht, nämlich die beiden Lager und das Planetengetriebe.

Auf diese Weise werden die zu schmierenden Komponenten des Achsendantriebs gezielt und kontinuierlich, unabhängig von einer eventuellen Neigung an einem Seitenhang, versorgt. Durch die kontinuierliche Versorgung erreicht man zudem eine kontrollierte Schmierung und Abfuhr eventueller Reibungswärme von den Lagerungen und vom Planetengetriebe, was zu einer größeren Lebensdauer, vergrößerten Serviceintervallen und verminderter Geräuschentwicklung des Achsendantriebs führt, und man kann den Ölstand im Achsendantrieb gegenüber bisherigen Achsendantrieben absenken, was u.a. auch die Planschverluste vermindert und den Wirkungsgrad verbessert.

### Ausführungsbeispiel

In den Zeichnungen ist ein nachfolgend näher beschriebenes Ausführungsbeispiel der Erfindung dargestellt. Es zeigt:
- Fig. 1: einen vertikalen Schnitt durch einen Achsendantrieb für einen Ackerschlepper,
- Fig. 2: eine perspektivische Ansicht einer Buchse zum Transport des Schmiermittels zur äußeren Lagerung,
- Fig. 3: ein eine perspektivische Ansicht eines Planetenzahnrads,
- Fig. 4: einen Schnitt durch das Planetenzahnrad der Figur 3,
- Fig. 5: eine perspektivische Ansicht eines Zuführelements für Schmiermittel zum Planetenradträger von einer ersten Seite,
- Fig. 6: eine perspektivische Ansicht des Zuführelements der Figur 5 von einer zweiten Seite,
- Fig. 7: eine perspektivische Ansicht des Achsendantriebs im zusammengebauten Zustand, und
- Fig. 8: eine Explosionsansicht des Achsendantriebs.

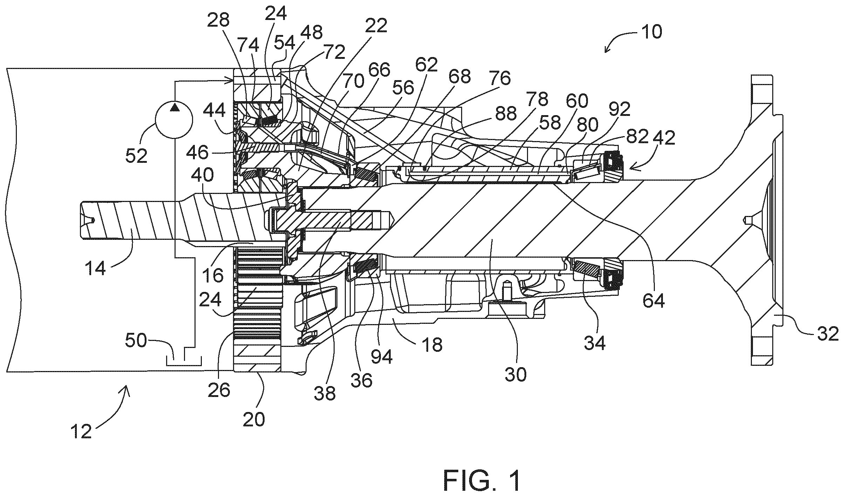

Die Figur 1 zeigt einen vertikalen Schnitt durch einen Achsendantrieb 10. Der Achsendantrieb 10 stellt eine Antriebsverbindung zwischen einem Differenzialgetriebe 12 und einem Radflansch 32, an dem eine Felge eines Rads angebracht oder angebracht ist, bereit und dient zudem als mechanische Verbindung zwischen Differenzialgetriebe 12 und Radflansch 32. Das Differenzialgetriebe 12 umfasst in an sich bekannter und daher in den Figuren nicht gezeigter Weise eine Antriebswelle, die über Zahnräder mit zwei Eingangswellen 14 von an jeweils einer Seite des Differenzialgetriebes 12 angeordneten Achsendantrieben 10 in Antriebsverbindung steht. Die Antriebswelle des Differenzialgetriebes 12 wird wiederum über einen Antriebsmotor, üblicherweise ein Verbrennungsmotor, und ein Getriebe mit wählbarer Übersetzung angetrieben. Weitere Einzelheiten hierzu lassen sich beispielsweise der US 3 515 246 A und JP S 59 118 602 U entnehmen, deren Offenbarung durch Verweis mit in die vorliegenden Unterlagen aufgenommen wird.

Der Achsendantrieb 10 umfasst einen ringartigen Flansch 20, der mit dem Gehäuse des Differenzialgetriebes 12 verschraubt ist, und ein damit verbundenes Gehäuse 18, das sich in axialer Richtung an den Flansch 20 nach außen hin anschließt. Die Eingangswelle 14 erstreckt sich in den Flansch 20 hinein und bildet dort ein verzahntes Sonnenrad 16 eines Planetengetriebes, das zur Verminderung der Drehzahl der Eingangswelle 14 gegenüber einer im Folgenden als Achse 30 bezeichneten Ausgangswelle des Achsendantriebs 10, die mit dem Radflansch 32 verbunden oder damit einteilig hergestellt ist, dient. An einem Planetenradträger 22, der mit dem inneren Ende der Achse 30 starr verbunden ist, sind durch mit Wälzlagern ausgestattete Lagerungen 28 eine Anzahl (in der vorliegenden Ausführungsform drei) verzahnte Planetenräder 24 abgestützt. Die Planetenräder 24 kämmen mit dem Sonnenrad 16 und einer am Innenumfang des Flansches 20 vorgesehenen Verzahnung 26, die als Ringrad dient.

Vorliegend entspricht die axiale Richtung der Symmetrieachse der Achse 30, die sich in der Figur 1 von links nach rechts verläuft, und die radiale Richtung verläuft quer dazu, in der Figur 1 in vertikaler Richtung. In axialer Richtung erstreckt sich die Achse 30 von einem inneren Ende, in der Figur 1 links, zu einem äußeren Ende, in der Figur 1 rechts. In radialer Richtung ist der Richtungshinweis "außen" als von der Symmetrieachse der Achse 30 hinweg zu verstehen und "innen" verläuft dazu in Gegenrichtung.

Die Anbringung des Planetenradträgers 22 an der Achse 30 erfolgt durch eine Andruckscheibe 40 und eine Schraube 38, die einen konischen Endabschnitt des Planetenradträgers 22 auf einen ebenfalls konischen Endabschnitt der Achse 30 drückt. Beide Endabschnitte sind üblicherweise in Umfangsrichtung mit zusammenwirkenden Merkmalen, z.B. Verzahnungen ausgestattet.

Die Achse 30 ist, dem Planetenradträger 22 benachbart, durch eine mit Wälzlagern ausgestattete, innere Lagerung 36, die sich auf einem Ring 92 abstützt, im Gehäuse 18 des Achsendantriebs 10 drehbar abgestützt. Eine mit Wälzlagern ausgestattete, äußere Lagerung 34 befindet sich, dem äußeren, dem Radflansch 32 benachbarten Ende des Gehäuses 18 benachbart, ebenfalls zwischen dem Gehäuse 18 und der Achse 30, und stützt sich auf einem Ring 94 ab. Das Gehäuse 18 ist am äußeren Ende, der äußeren Lagerung 34 benachbart, durch einen Dichtungszusammenbau 42 gegenüber der Achse 30 abgedichtet.

Die Lagerungen 28 der Planetenräder 24 werden durch Scheiben 44 und Schrauben 46 gegen eine Schulter 48 des Planetenradträgers 22 gedrückt und somit in axialer Richtung fixiert.

Zur Versorgung des Achsendantriebs 10 mit Schmiermittel ist im Differenzialgetriebe 12 eine Pumpe 52 vorgesehen, die das Schmiermittel, in der Regel Getriebeöl, aus einem Vorrat 50 am Boden des Differenzialgetriebes 12 entnimmt und durch einen axialen Kanal 54, der sich an der Oberseite des Flansches 20 befindet, in einen weiteren axialen, im Gehäuse 18 des Achsendantriebs 10 vorgesehenen Kanal 56 fördert, der sich in einem Winkel gegenüber der Symmetrieachse der Achse 30 axial nach außen und radial nach innen erstreckt. Der weitere Kanal 56 endet der Achse 30 benachbart, gegenüber der inneren Lagerung 36 axial nach außen versetzt, im radialen Abstand von der Achse 30.

Die Pumpe 52 kann durch eine beliebige Welle innerhalb des Differenzialgetriebes 12 angetrieben werden, z.B. die Antriebswelle oder eine der Eingangswellen 14. Es wäre auch denkbar, die Pumpe 52 mittels eines separaten Motors kontinuierlich anzutreiben.

In das Gehäuse 18 ist eine die Achse 30 umschließende, rohrartige Buchse 58 eingeschoben, die sich nicht mit der Achse 30 dreht, sondern am Gehäuse 18 drehfest angebracht ist. Die Buchse 58 erstreckt sich in axialer Richtung zwischen der inneren Lagerung 36 und der äußeren Lagerung 34. In die Buchse 58 sind in der dargestellten Ausführungsform Kanäle 60 eingebracht, die sich von einem axial inneren Ende 78, das dem äußeren Ende 76 des weiteren Kanals 56 benachbart ist, bis zu einem axial äußeren Ende 80 erstrecken. Insgesamt sind zwei Kanäle 60 vorgesehen, die paarweise in Umfangsrichtung benachbart angeordnet sind. Die Kanäle 60 umfassen einen dem inneren Ende 78 benachbarten, radialen Abschnitt und einen sich daran anschließenden, axialen Abschnitt. Die Kanäle 60 sind in Drehrichtung mit dem weiteren Kanal 56 ausgerichtet, sodass das Schmiermittel aus dem weiteren Kanal 60 in die zwei Kanäle 60 der Buchse 58 strömen kann.

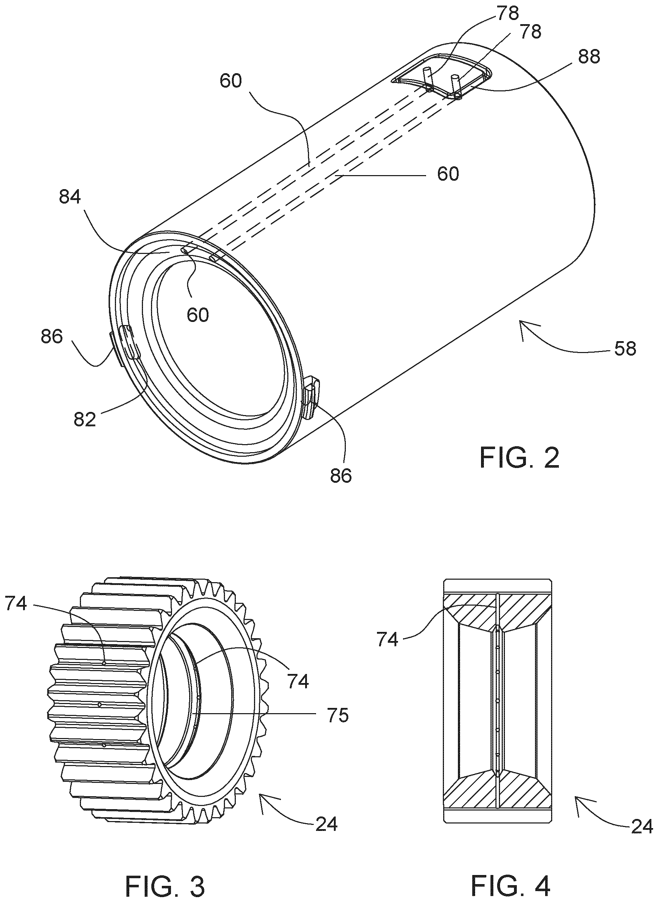

Das äußere Ende 80 der Kanäle 60 der Buchse 58 ist radial und axial mit den Wälzlagern der äußeren Lagerung 34 ausgerichtet, sodass das aus dem Kanal 60 einlaufende Schmiermittel, vorzugsweise in einer ringförmigen Vertiefung 84 (vgl. Figur 2) am äußeren Ende der Buchse 58 in Umfangsrichtung verteilt, axial entlang der Wälzlager der äußeren Lagerung 34 nach außen strömt. Am äußeren Ende der Wälzlager der äußeren Lagerung 34 gelangt das Schmiermittel dann in einen Kanal 82, der sich anfangs radial an der Außenseite der Wälzlager der äußeren Lagerung 34 erstreckt und das Schmiermittel axial nach innen führt. Dort strömt es durch einen sich radial durch die Buchse 58 erstreckenden Teil des Kanals 82 und gelangt an der Innenseite der Buchse 58 in einen dort angeordneten Zwischenraum 64 zwischen ebendieser Buchse 58 und der Achse 30. Durch diesen Zwischenraum 64 wird das Schmiermittel wieder axial nach innen geführt, wo es in einen Kanal 68 gelangt, der sich radial nach außen erstreckt und das Schmiermittel zu den Wälzlagern der inneren Lagerung 36 führt.

Dort strömt das Schmiermittel entlang der Wälzlager radial nach außen und axial nach innen und gelangt in eine Auffangschale 62 eines Leitelements 66 und von dort in einen von drei Kanälen 70 des Leitelements 66. Das Leitelement 66 rotiert mit dem Planetenradträger 22. Die Kanäle 70 des Leitelements 66 sind mit den Planetenrädern 24 ausgerichtet und das Schmiermittel aus den Kanälen 70 gelangt direkt in Kanäle 72 des Planetenradträgers 24, die sich axial nach innen und radial nach außen erstrecken und das Schmiermittel den Lagerungen 28 etwa mittig zuführen. Die Planetenräder 24 sind innenseitig mit axial mittig angeordneten, V-förmigen Nuten 75 und von den Nuten 75 ausgehenden, mit um den Umfang der Planetenräder 24 verteilten, mittigen, sich radial erstreckenden Kanälen 74 versehen, durch die das in den Nuten 75 gesammelte Schmiermittel an den äußeren Umfang der Planetenräder 24 gelangt, wo die im Eingriff mit dem Ringrad 26 und dem Sonnenrad 16 stehenden Flächen, auch des Ringrads 26 und des Sonnenrads 16, mit Schmiermittel versorgt werden. Von dort gelangt das Schmiermittel letztlich wieder in den Vorrat 50.

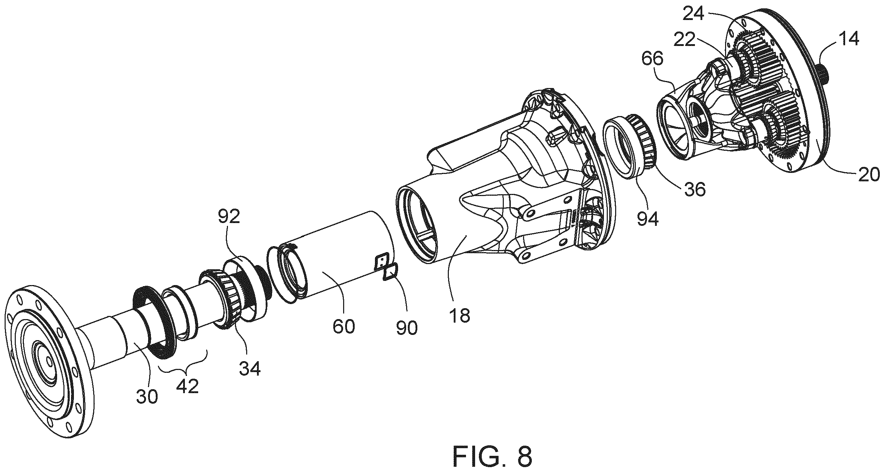

Die Figur 2 zeigt eine perspektivische Ansicht der Buchse 58. An ihrem äußeren Ende sind Merkmale 86 vorgesehen, mit denen sie im Gehäuse 18 verrastet werden kann. Zudem ist erkennbar, dass um die inneren Enden 78 der Kanäle 60 eine rechteckige Nut 88 vorgesehen ist, in der eine Dichtung 92 (s. Figur 8) positionierbar ist, die am Gehäuse 18 in Anlage gerät und ein unerwünschtes Ausströmen von Schmiermittel verhindert.

Die Figuren 3 und 4 zeigen ein Planetenrad 24 in perspektivischer Darstellung und im Schnitt.

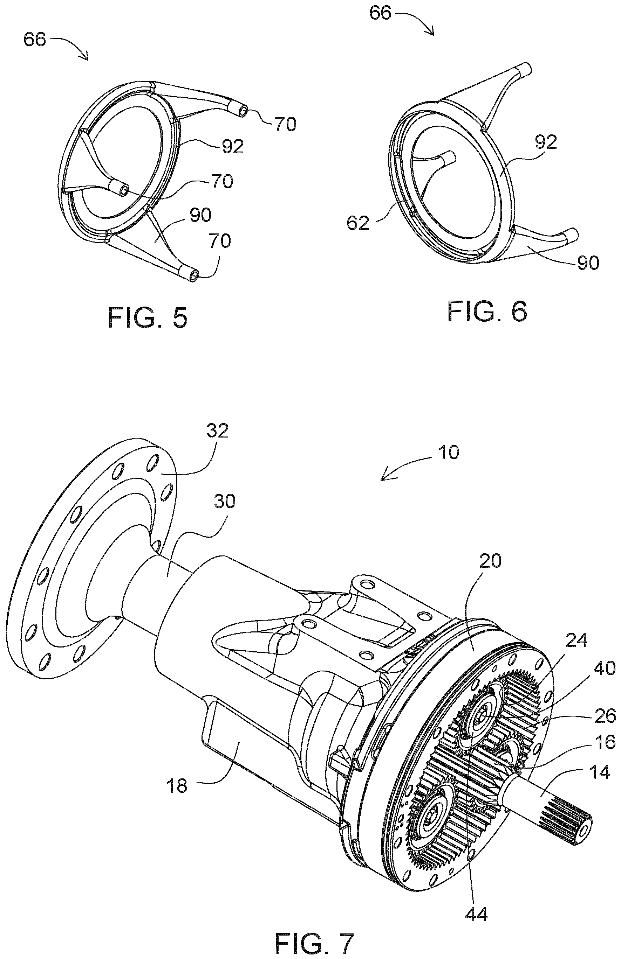

In den Figuren 5 und 6 ist das Leitelement 66 von der Außen- und Innenseite betrachtet in einer perspektivischen Darstellung gezeigt. Die Kanäle 70 sind in Schenkeln 90 angeordnet, die sich von einem ringförmigen Körper 92 erstrecken, radial nach außen und axial nach innen, in sich aufweitender Weise. Die Kanäle 70 verengen sich vom Einlass zum Auslass in Umfangsrichtung trichterförmig.

Die Figuren 7 und 8 zeigen den Achsendantrieb 10 in perspektivischer Darstellung, einmal in zusammengebauten Zustand und einmal in einer explodierten Darstellung.

Nach alledem ist erkennbar, dass der vorliegende Achsendantrieb 10 eine kontinuierliche, aktive Versorgung mit Schmiermittel beinhaltet. Das Schmiermittel läuft in einem fortlaufenden Kreislauf aus dem Vorrat 50, wird durch die Pumpe 52 mit Druck beaufschlagt, durch die (einen ersten Kanalabschnitt im Sinne der Ansprüche bildenden) Kanäle 54, 56, 60 zu den Wälzlagern der äußeren Lagerung 34, von dort durch den Kanal 82 und den Zwischenraum 64 in den Kanal 68 (von den die letztgenannten drei einen zweiten Kanalabschnitt im Sinne der Ansprüche bilden), von dort zu den Wälzlagern der inneren Lagerung 36, von dort durch die Kanäle 70 und 72 (die beide einen dritten Kanalabschnitt im Sinne der Ansprüche bilden) zu den Wälzlagern der Lagerungen 28 und von dort durch die Kanäle 74 zu den Planetenrädern 24 und letztlich wieder in den Vorrat 50.

## Patentansprüche

1. Schmiermittelversorgung für einen Achsendantrieb (10), der ein Gehäuse (18) mit einer Eingangswelle (14), einem Planetengetriebe und einer antreibbaren Achse (30) umfasst, wobei die Achse (30) mittels einer inneren Lagerung (36) und einer äußeren Lagerung (34) am Gehäuse (18) abgestützt, von der Eingangswelle (14) über das Planetengetriebe antreibbar und mit einem Radflansch (32) zur Aufnahme eines Rades gekoppelt ist, **dadurch gekennzeichnet, dass** die Schmiermittelversorgung einen ersten Kanalabschnitt, mit dem die äußere Lagerung (34) über eine Pumpe (52) mit einem Schmiermittel aus einem Vorrat (50) beaufschlagbar ist, einen zweiten Kanalabschnitt, mit dem das Schmiermittel von der äußeren Lagerung (34) zur inneren Lagerung (36) führbar ist, sowie einen dritten Kanalabschnitt umfasst, mit dem das Schmiermittel von der inneren Lagerung zum Planetengetriebe führbar ist.

2. Schmiermittelversorgung nach Anspruch 1, wobei das Planetengetriebe ein mit der Eingangswelle (14) verbundenes Sonnenrad (16), einen mit der Achse (30) gekoppelten Planetenradträger (22) mit durch Lagerungen (28) drehbar daran abgestützten Planetenrädern (24) und ein Ringrad (26) umfasst und das Schmiermittel durch den dritten Kanalabschnitt, der zumindest teilweise durch den Planetenradträger (22) verläuft, den Lagerungen (28) der Planetenräder (24) zuführbar ist.

3. Schmiermittelversorgung nach Anspruch 2, wobei das Planetengetriebe innerhalb eines mit dem Gehäuse (18) verbundenen Flansches (20) angeordnet ist.

4. Schmiermittelversorgung nach Anspruch 2 oder 3, wobei die Planetenräder (24) mit um den Umfang verteilten, radial verlaufenden Kanälen (74) ausgestattet sind, durch welche das Schmiermittel von den Lagerungen (28) der Planetenräder (24) zum Umfang der Planetenräder (24) führbar ist.

5. Schmiermittelversorgung nach Anspruch 4, wobei die Kanäle (74) in den Planetenrädern (24) in axialer Richtung etwa mittig angeordnet sind.

6. Schmiermittelversorgung nach einem der Ansprüche 3 bis 5, wobei der Vorrat (50) und die Pumpe (52) innerhalb eines mit dem Flansch (20) verbundenen Differenzialgetriebes (12), durch welches Differenzialgetriebe (12) die Eingangswelle (14) antreibbar ist, angeordnet sind und der erste Kanalabschnitt einen axialen Kanal (54) umfasst, der sich vom Differenzialgetriebe (12) ausgehend durch den Flansch (20) erstreckt und sich an den axialen Kanal (54) ein weiterer Kanal (56) des ersten Kanalabschnitts anschließt, der sich durch das Gehäuse (18) erstreckt.

7. Schmiermittelversorgung nach Anspruch 6, wobei dem äußeren Ende (76) des weiteren Kanals (56) ein axial inneres Ende (78) eines Kanals (60) des ersten Kanalabschnitts innerhalb einer drehfest im Gehäuse (18) angeordneten Buchse (58) benachbart ist und der Kanal (60) das Schmiermittel zum äußeren Lager (34) führt.

8. Schmiermittelversorgung nach Anspruch 7, wobei der zweite Kanalabschnitt zumindest teilweise durch einen Zwischenraum (64) zwischen der Buchse (58) und der Achse (30) gebildet wird.

9. Schmiermittelversorgung nach einem der Ansprüche 2 bis 8, wobei der inneren Lagerung (36) ein Leitelement (66) benachbart ist, das am Planetenradträger (22) befestigt ist, wobei das Leitelement (66) eine der inneren Lagerung (36) benachbarte Auffangschale (62) für von der inneren Lagerung (36) abgegebenes Schmiermittel und sich bis zu innerhalb des Planetenradträgers (22) angeordneten Kanälen (72) erstreckende Kanäle (70) umfasst, wobei die Kanäle (72) des Planetenradträgers (22) das Schmiermittel zu den Lagerungen (28) jeweils eines Planetenrads (24) führen und die Kanäle (70) des Leitelements (66) gemeinsam mit den Kanälen (72) des Planetenradträgers (22) zumindest Teile des dritten Kanalabschnitts bilden.

10. Achsendantrieb (18) mit einer Schmiermittelversorgung nach einem der vorhergehenden Ansprüche.

11. Achszusammenbau, insbesondere für eine Hinterachse eines Ackerschleppers, umfassend ein Differenzialgetriebe (12) und an dessen beiden Seiten angeordnete Achsendantriebe (18) nach Anspruch 10.

## Geänderte Patentansprüche

### Geänderte Patentansprüche gemäss Regel 137(2) EPÜ.

1. Schmiermittelversorgung für einen Achsendantrieb (10), der ein Gehäuse (18) mit einer Eingangswelle (14), einem Planetengetriebe und einer antreibbaren Achse (30) umfasst, wobei die Achse (30) mittels einer inneren Lagerung (36) und einer äußeren Lagerung (34) am Gehäuse (18) abgestützt, von der Eingangswelle (14) über das Planetengetriebe antreibbar und mit einem Radflansch (32) zur Aufnahme eines Rades gekoppelt ist, wobei die Schmiermittelversorgung einen ersten Kanalabschnitt, mit dem die äußere Lagerung (34) über eine Pumpe (52) mit einem Schmiermittel aus einem Vorrat (50) beaufschlagbar ist, einen zweiten Kanalabschnitt, mit dem das Schmiermittel von der äußeren Lagerung (34) zur inneren Lagerung (36) führbar ist, sowie einen dritten Kanalabschnitt umfasst, mit dem das Schmiermittel von der inneren Lagerung zum Planetengetriebe führbar ist, sodass eine aktive Schmiermittelversorgung des Achsendantriebs (10) von der Pumpe (52) nacheinander über den ersten Kanalabschnitt zur äußeren Lagerung (34) der Achse (30) am Gehäuse (18), von dort über den zweiten Kanalabschnitt zur inneren Lagerung (36) der Achse (30) am Gehäuse (18) und von dort über den dritten Kanalabschnitt zum Planetengetriebe erfolgt.

2. Schmiermittelversorgung nach Anspruch 1, wobei das Planetengetriebe ein mit der Eingangswelle (14) verbundenes Sonnenrad (16), einen mit der Achse (30) gekoppelten Planetenradträger (22) mit durch Lagerungen (28) drehbar daran abgestützten Planetenrädern (24) und ein Ringrad (26) umfasst und das Schmiermittel durch den dritten Kanalabschnitt, der zumindest teilweise durch den Planetenradträger (22) verläuft, den Lagerungen (28) der Planetenräder (24) zuführbar ist.

3. Schmiermittelversorgung nach Anspruch 2, wobei das Planetengetriebe innerhalb eines mit dem Gehäuse (18) verbundenen Flansches (20) angeordnet ist.

4. Schmiermittelversorgung nach Anspruch 2 oder 3, wobei die Planetenräder (24) mit um den Umfang verteilten, radial verlaufenden Kanälen (74) ausgestattet sind, durch welche das Schmiermittel von den Lagerungen (28) der Planetenräder (24) zum Umfang der Planetenräder (24) führbar ist.

5. Schmiermittelversorgung nach Anspruch 4, wobei die Kanäle (74) in den Planetenrädern (24) in axialer Richtung etwa mittig angeordnet sind.

6. Schmiermittelversorgung nach einem der Ansprüche 3 bis 5, wobei der Vorrat (50) und die Pumpe (52) innerhalb eines mit dem Flansch (20) verbundenen Differenzialgetriebes (12), durch welches Differenzialgetriebe (12) die Eingangswelle (14) antreibbar ist, angeordnet sind und der erste Kanalabschnitt einen axialen Kanal (54) umfasst, der sich vom Differenzialgetriebe (12) ausgehend durch den Flansch (20) erstreckt und sich an den axialen Kanal (54) ein weiterer Kanal (56) des ersten Kanalabschnitts anschließt, der sich durch das Gehäuse (18) erstreckt.

7. Schmiermittelversorgung nach Anspruch 6, wobei dem äußeren Ende (76) des weiteren Kanals (56) ein axial inneres Ende (78) eines Kanals (60) des ersten Kanalabschnitts innerhalb einer drehfest im Gehäuse (18) angeordneten Buchse (58) benachbart ist und der Kanal (60) das Schmiermittel zum äußeren Lager (34) führt.

8. Schmiermittelversorgung nach Anspruch 7, wobei der zweite Kanalabschnitt zumindest teilweise durch einen Zwischenraum (64) zwischen der Buchse (58) und der Achse (30) gebildet wird.

9. Schmiermittelversorgung nach einem der Ansprüche 2 bis 8, wobei der inneren Lagerung (36) ein Leitelement (66) benachbart ist, das am Planetenradträger (22) befestigt ist, wobei das Leitelement (66) eine der inneren Lagerung (36) benachbarte Auffangschale (62) für von der inneren Lagerung (36) abgegebenes Schmiermittel und sich bis zu innerhalb des Planetenradträgers (22) angeordneten Kanälen (72) erstreckende Kanäle (70) umfasst, wobei die Kanäle (72) des Planetenradträgers (22) das Schmiermittel zu den Lagerungen (28) jeweils eines Planetenrads (24) führen und die Kanäle (70) des Leitelements (66) gemeinsam mit den Kanälen (72) des Planetenradträgers (22) zumindest Teile des dritten Kanalabschnitts bilden.

10. Achsendantrieb (18) mit einer Schmiermittelversorgung nach einem der vorhergehenden Ansprüche.

11. Achszusammenbau, insbesondere für eine Hinterachse eines Ackerschleppers, umfassend ein Differenzialgetriebe (12) und an dessen beiden Seiten angeordnete Achsendantriebe (18) nach Anspruch 10.
